# EUROPEAN PATENT SPECIFICATION

(11) **EP 3 556 532 B1**
(45) Date of publication and mention of the grant of the patent: **23.02.2022**
(21) Application number: 19169171.6
(22) Date of filing: 15.04.2019
(51) Int. Cl.: B29C 45/16, H02K 3/50, H02K 5/22, H02K 15/12, B29C 45/14

(54) **MOLDED BODY**
FORMKÖRPER
CORPS MOULÉ

(30) Priority: 17.04.2018 JP 2018079236
(43) Date of publication of application: 23.10.2019
(73) Proprietor: Honda Motor Co., Ltd., Tokyo 107-8556 (JP); Takagi Seiko Corporation, Takaoka-shi, Toyama 933-8628 (JP)
(72) Inventor: Asahi, Atsushi, Saitama 351-0193 (JP); Hirota, Kazuya, Toyama 933-8628 (JP); Onishi, Yoshifumi, Toyama 933-8628 (JP)
(74) Representative: Beder, Jens

(56) References cited:
- EP-B1- 0 519 709
- EP-B1- 2 499 704
- JP-A- 2012 146 602
- US-A- 5 527 502
- US-A1- 2016 020 660
- US-A1- 2017 110 929
- US-A1- 2018 241 277
- US-B1- 6 370 986

## Description

### BACKGROUND

### Field of the Invention

The present invention relates to a molded body, which is a bus bar unit

### Background

In a rotary electric machine, a bus bar unit may be used for electrically connecting an external electric source and a coil of each phase. A plurality of bus bars that are formed of a metal material are molded by a resin material, and the bus bar unit is formed.

In the bus bar unit described above, in order to improve the quality, for example, a configuration described in Japanese Unexamined Patent Application, First Publication No. 2018-23222 is known. The bus bar unit described in Japanese Unexamined Patent Application, First Publication No. 2018-23222 includes a cap that separately supports each of the plurality of bus bars and an outer support part that molds the plurality of bus bars collectively together with the cap.

US 2016/0020660 A1 discloses a bus bar unit for passing a current to a coil wound around a stator. The one or more bus bars are stacked with predetermined spaces in a primary mold. Primary insert molding is performed by injecting the molten insulating resin into the primary mold to form a primary mold member. The primary molded members are then arranged in a secondary mold and secondary insert molding is performed to finalize the bus bar unit.

US 2017 / 110 929 A2 discloses a rotating electrical machine connection component includes a plurality of linear conductors being insulates wires, and a first molded resin portion that covers portions of the plurality of linear conductors and connects the plurality of linear conductors to each other. Each of the plurality of linear conductors includes a first straight portion extending out of the first molded resin portion in a direction parallel to a rotational axis of the rotor and connected to the terminal block, a second straight portion extending out of the first molded resin portion in a different direction from the first straight portion and a bent portion bent between the first and second straight portions. The first molded resin portion has a bar-shaped coupling portion for coupling the first to third linear conductors, and three protruding portions protruding from the coupling portion respectively along the second straight portions. The first to third linear conductors are arranged so that portions of the first straight portions, portions of the second straight and the first bent portions are covered with the coupling portion of the first molded resin portion.

Third straight portions of the first to third linear conductors extend in a direction which is perpendicular to the direction parallel to the rotational axis and is also substantially at a right angle with respect to the second straight portions. The third straight portion of the first linear conductor, which is the longest of the third straight portions, and the third straight portion of the second linear conductor adjacent to the first linear conductor are coupled to each other by the second molded resin portion. Thus, the first linear conductor and the second linear conductor can maintain the shape and position relative to each other.

### SUMMARY

However, recently, a further improvement of quality is required for a molded body such as the bus bar unit.

An aspect of the present invention provides a molded body capable of improving a quality.
(1) A bus bar unit (used interchangeably hereinafter with the term "molded body") according to an aspect of the present invention includes: a plurality of separate first resin parts; a plurality of bus bars that are configured to electrically connect an external electric source and a coil of a rotary electric machine, that are each separately covered by the first resin parts and that each have a protrusion portion which protrudes toward the coil from a first end portion of the first resin part; and a second resin part that has a second end portion which is positioned on an opposite side of the protrusion portion with respect to the first end portion in an extension direction of the protrusion portion and that covers all of the first resin parts together in a state where the first resin parts protrudes in the extension direction, wherein a portion of the first resin parts that is positioned between the first end portion and the second end portion is formed in a flat surface in accordance with claim 1.
(2) In the molded body according to any of the above aspects (1), the first resin parts maybe attached to the metal parts.

In the molded body according to the present invention, the metal parts are bus bars (used interchangeably hereinafter with the term "metal parts") that are configured to electrically connect an external electric source and a coil of a rotary electric machine.

According to the above aspect (1), the metal parts are covered by the first resin parts, and thereby, a mold portion of the metal parts by the second resin part is able to be reinforced by the first resin parts. Thereby, at the time of molding of the second resin part, it is possible to prevent a position displacement and a bend of the metal parts in the mold main body due to a molding pressure and the like, and it is possible to perform a positioning of the metal parts in the mold main body with high accuracy. Thereby, it becomes possible to simplify a production process, and it is possible to reduce the cost and stabilize the quality.

According to the above aspect (1), the second resin part covers the first resin parts in a state where the first resin parts protrude.

According to this configuration, a boundary section between a first cover portion and a second cover portion is set at a more backward position (position on the opposite side of the protrusion portion with respect to the first end portion) than the first end portion in the extension direction. Therefore, it is possible to allow the mold main body to come into contact with a portion of the first resin parts, the portion being a surface that is directed to a direction which is crossed with the extension direction and being positioned between the first end portion and the second end portion, and it is possible to support the first resin part. Accordingly, it is possible to secure a contact area between the first resin parts and the support part of the mold main body. Thereby, even when a plane pressure that acts between an outer surface of the first resin parts and the support part of the mold main body is low, for example, due to a size dispersion of the first resin parts and the like, it is possible to prevent a resin material from flowing into the support part via a space between an outer surface of the first end part and an inner surface of the support part at the time of molding of the second resin part. As a result, it is possible to prevent the resin material from remaining as a burr on the outer surface of the first end portion.

Accordingly, it is possible to provide a molded body having an excellent quality and the first end portion is further easily supported by the mold main body at the time of molding of the second resin part. Therefore, it is possible to further improve the quality of the molded body.

Further according to the above aspect (1), the first resin parts support separately each metal part, and therefore, each metal part is easily set at a desired position in the mold main body. In this state, by integrating the metal parts by the second resin part, it is possible to provide a molded body in which a relative position of the metal parts is positioned with high accuracy.

According to the above aspect (2), the first resin parts that are formed separately from the metal parts are attached to the metal parts, and therefore, it is possible to further simplify the production process. Further, it is possible to prevent a position displacement of the metal parts due to an injection pressure or the like at the time of first molding (at the time of molding of the first resin part) differently from a case in which the first resin parts and the second resin part are formed, for example, according to a two-color molding or the like. Thereby, it is possible to further stabilize the quality.

According to the above aspect (1), it is possible to secure a rigidity, for example, compared to a case where a wire material or the like is used for the connection between the rotary electric machine and the external electric source. Further, in the present aspect, it is possible to provide a molded body having an excellent quality as described above, and therefore, it is possible to prevent a twist, a bend, and the like of the metal part in a state where the rotary electric machine and the external electric source are connected together. Thereby, it is possible to reduce stress that acts on the molded body, and it is possible to improve the durability of the molded body.

### BRIEF DESCRIPTION OF THE DRAWINGS

FIG. 1 is a cross-sectional view showing an entire configuration of a rotary electric machine according to an embodiment.
FIG. 2 is a perspective view showing part of a stator according to the embodiment.
FIG. 3 is a perspective view of a bus bar unit according to the embodiment.
FIG. 4 is a partial perspective view showing a state in which an outer support part is removed in the bus bar unit according to the embodiment.
FIG. 5 is an enlarged view of a V part of FIG. 3.
FIG. 6 is a process drawing showing a molding process of the outer support part and is a cross-sectional view that corresponds to a VI-VI line of FIG. 5.

### BRIEF DESCRIPTION OF THE REFERENCE NUMERALS

- 1:: rotary electric machine
- 13:: coil
- 15:: bus bar unit (molded body)
- 31:: bus bar (metal part)
- 61:: cap (first resin part)
- 62:: outer support part (second resin part)
- 82:: second mold section (second end portion)
- 85:: cap protrusion portion (first end portion)
- 100:: shaping mold
- 101:: first mold (mold main body)

### DESCRIPTION OF THE EMBODIMENTS

Hereinafter, an embodiment of the present invention is described with reference to the drawings.

### [Rotary electric machine]

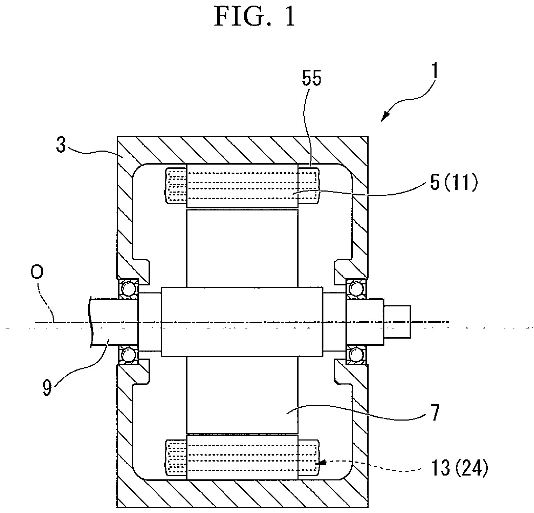

FIG. 1 is a schematic configuration view (cross-sectional view) showing an entire configuration of a rotary electric machine 1 according to an embodiment.

The rotary electric machine 1 shown in FIG. 1 is, for example, a travel motor that is mounted on a vehicle such as a hybrid vehicle or an electric vehicle. However, the configuration of the present invention is not limited to the travel motor and is also applicable to an electric power generation motor, a motor for another application, or a rotary electric machine (including a dynamo) for applications other than the vehicle.

The rotary electric machine 1 includes a case 3, a stator 5, a rotor 7, and an output shaft 9.

The output shaft 9 is supported rotatably by the case 3.

The rotor 7 is externally fitted to the output shaft 9. In the following description, a direction along an axis line O of the output shaft 9 may be simply referred to as an axial direction, a direction orthogonal to the axis line O may be referred to as a radial direction, and a direction around the axis line O may be referred to as a circumferential direction.

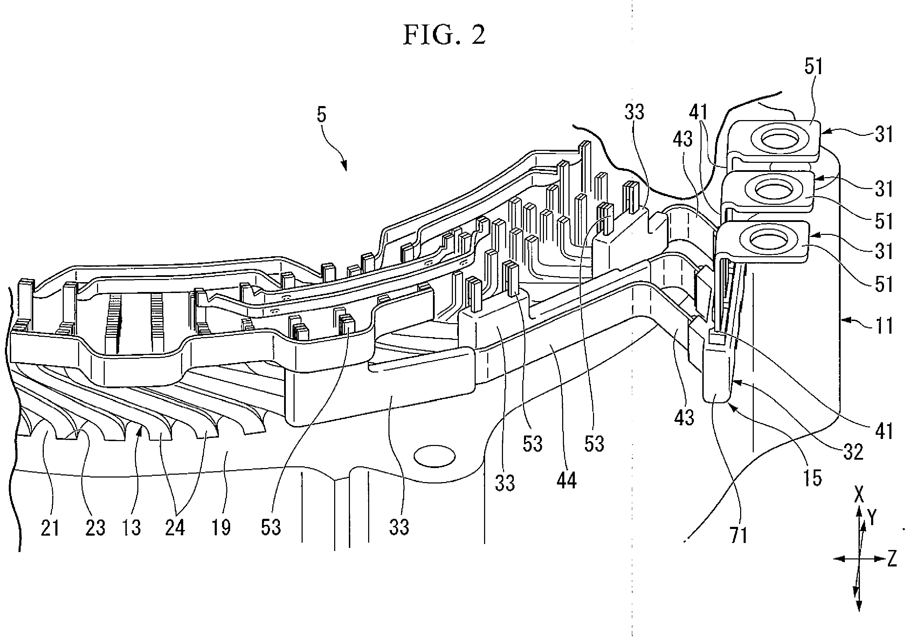

FIG. 2 is a perspective view showing part of the stator 5.

As shown in FIG. 2, the stator 5 includes a stator core 11, a coil 13 that is attached to the stator core 11, and a bus bar unit (molded body) 15 that connects together the coil 13 and an external electric source (not shown).

The stator core 11 is formed in a tube shape that surrounds the rotor 7 (refer to FIG. 1) from an outside in a radial direction. Specifically, the stator core 11 includes a back yoke part 19 having a tube shape and a teeth part 21.

The back yoke part 19 is fixed to the case 3 (refer to FIG. 1) described above.

The teeth part 21 protrudes inward in the radial direction from an inner circumferential surface of the back yoke part 19. A plurality of teeth parts 21 are formed at intervals in a circumferential direction. A slot 23 through which the coil 13 is inserted is formed between the teeth parts 21 that are adjacent in the circumferential direction.

That is, the slot 23 penetrates in an axial direction through the stator core 11.

The coil 13 is a three-phase coil that is constituted of a U-phase, a V-phase, and a W-phase. The coil 13 of each phase of the present embodiment is formed by a plurality of corresponding segment coils 24 being connected to each other. Each of the segment coils 24 is inserted in the slot 23 of the stator core 11 and is attached to the stator core 11. The segment coils 24 of the same phase are joined together by a TIG welding, a laser welding, or the like at a first side in the axial direction with respect to the stator core 11.

The configuration of the coil 13 can be appropriately changed. For example, the coil 13 is not limited to the segment coil 24 and may be attached to the stator core 11 by a method in which the coil 13 is wound around the teeth part 21 or the like. The coil 13 of the present embodiment is attached to the stator core 11 according to a distributed winding; however, the configuration is not limited thereto. The coil 13 may be attached to the stator core 11 according to a concentrated winding.

### <Bus bar unit>

The bus bar unit 15 includes a plurality of bus bars (metal parts) 31, a first cover portion 32, and a second cover portion 33.

Each of the bus bars 31 is formed in a three-dimensional shape by applying a sheet metal processing to a plate material having conductivity such as a metal (for example, copper). The bus bars 31 are arranged side-by-side in the circumferential direction. The bus bars 31 are formed in a shape that corresponds to each other. Therefore, in the following description, one of the bus bars 31 is described as an example. A part of another of the bus bars 31 which corresponds to a part of the one of the bus bars 31 is given by the same reference sign, and a description of the part is omitted.

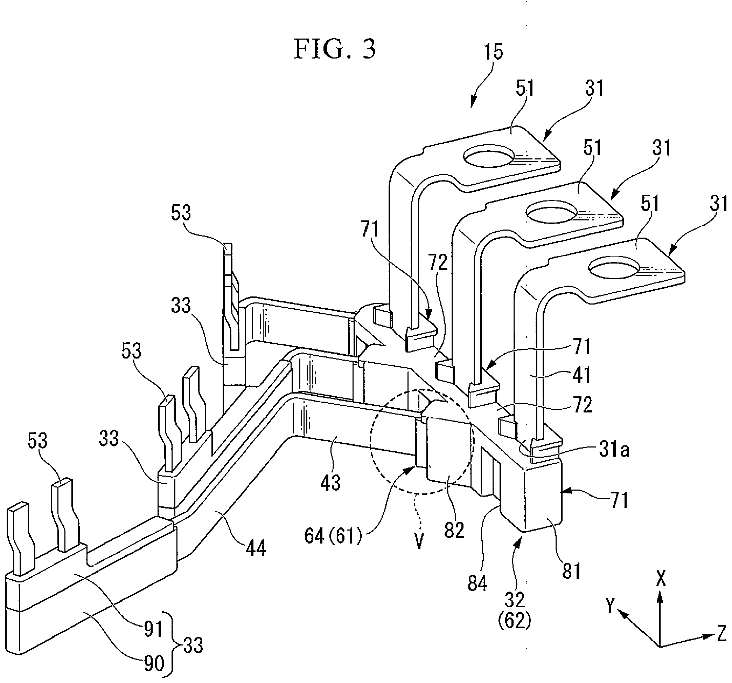

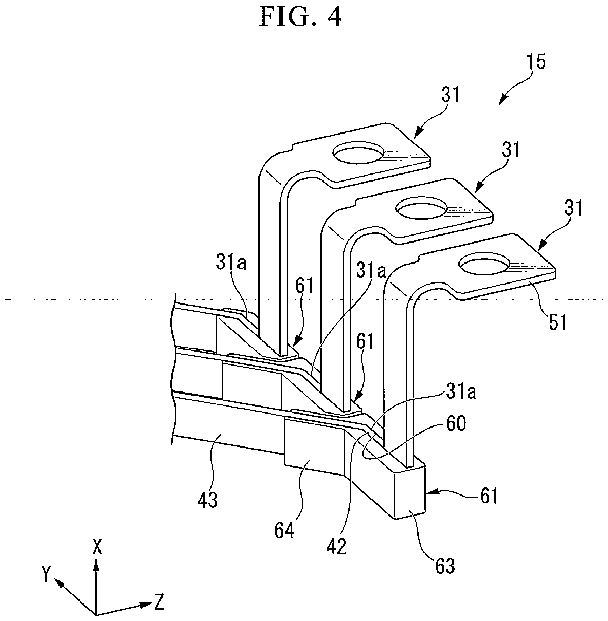

FIG. 3 is a perspective view of the bus bar unit 15. FIG. 4 is a partial perspective view of the bus bar unit 15 in a state in which an outer support part 62 is removed.

As shown in FIG. 3 and FIG. 4, the bus bar 31 includes a first extension part 41, a second extension part 42 (refer to FIG. 4) that is connected to the first extension part 41, a third extension part 43 that is connected to the second extension part 42, and a fourth extension part 44 that is connected to the third extension part 43. In the following description, an extension direction of the first extension part 41 may be referred to as a X direction, an extension direction of the second extension part 42 may be referred to as a Y direction, and a direction orthogonal to the X direction and the Y direction may be referred to as a Z direction. In the present embodiment, the X direction is matched with the axial direction.

An external connection terminal 51 is provided on and continue to a +X direction end portion of the first extension part 41. As shown in FIG. 2, the external connection terminal 51 extends in a +Z direction (direction that is away from the stator core 11) from the +X direction end portion in the first extension part 41. The external connection terminal 51 is electrically connected to a terminal block of the external electric source (not shown).

As shown in FIG. 4, the second extension part 42 is provided to extend in a +Y direction from a -X direction end portion in the first extension part 41. In the present embodiment, the extension direction of the second extension part 42 is orthogonal to the first extension part 41 on the same plane as the extension direction of the first extension part 41. However, the extension direction of the second extension part 42 can be appropriately changed.

A +Z direction end portion of the third extension part 43 is connected to a +Y direction end portion in the second extension part 42. The third extension part 43 extends from the +Y direction end portion in the second extension part 42 toward a direction that is crossed with the extension directions of the first extension part 41 and the second extension part 42. Specifically, the third extension part 43 extends toward the +Y direction in a direction directed from the +Z direction to a -Z direction.

As shown in FIG. 3, a +Z direction end portion of the fourth extension part 44 is connected to a -Z direction end portion in the third extension part 43. The fourth extension part 44 extends from the -Z direction end portion in the third extension part 43 toward a direction that is crossed with the extension directions of the extension parts 41 to 43 described above. Specifically, the fourth extension part 44 extends toward a -Y direction in a direction directed to the -Z direction.

A coil connection terminal 53 is formed on a -Z direction end portion in the fourth extension part 44. The coil connection terminal 53 extends in a +X direction from the -Z direction end portion in the fourth extension part 44.

As shown in FIG. 2, the coil connection terminal 53 of each of the bus bars 31 is connected separately to a corresponding coil 13 (segment coil 24) of each phase that is drawn at the first side in the axial direction with respect to the stator core 11. Thereby, the external electric source and the coil 13 of each phase are electrically connected for each phase by each of the bus bars 31. Electric power is supplied to the coil 13 via the bus bar 31 from the external electric source.

As shown in FIG. 1, a powder coating is applied to a part of the coil 13 that protrudes in the axial direction from the stator core 11 and a part (in the vicinity of the coil connection terminal 53) of the bus bar unit 15 (a powder coating part 55 in FIG. 1). For example, powder particles (powder paint) having an insulation property are supplied in a state of having a fluidity, and by further heating and thermally curing the powder particles, the powder coating part 55 is formed.

As shown in FIG. 3, the first cover portion 32 collectively covers portions from the first extension part 41 to the third extension part 43 of the bus bars 31. Specifically, the first cover portion 32 covers a -X direction end portion in the first extension part 41, the entire region of the second extension part 42, and a -Y direction end portion in the third extension part 43 (hereinafter, referred to as a cover region 31a of the bus bar 31 in some cases) of the bus bars 31. The first cover portion 32 includes a cap (first resin part) 61 and an outer support part (second resin part) 62.

As shown in FIG. 4, the cap 61 is formed of an insulation material (resin material).

The cap 61 is attached separately to the cover region 31a of each of the bus bars 31. However, the cap 61 may be formed on each of the bus bars 31 according to an insert molding or the like. Since the caps 61 are formed of a similar configuration, one of the caps 61 is described as an example in the following description.

The cap 61 sandwiches the cover region 31a of the bus bar 31 and holds the cover region 31a inside the cap 61. An insertion opening part 60 in which the bus bar 31 is inserted is formed on the cap 61. The insertion opening part 60 is formed such that the bus bar 31 is able to be inserted in the cap 61 from the +X direction. Specifically, each insertion opening part 60 is formed throughout from a part of the cap 61 that is directed in the +X direction to a part of the cap 61 that is directed in the +Y direction.

The cap 61 has a first accommodation part 63 that accommodates the first extension part 41 and the second extension part 42 and a second accommodation part 64 that accommodates the third extension part 43.

The first accommodation part 63 is formed along the first extension part 41 and the second extension part 42. The first accommodation part 63 covers the -X direction end portion in the first extension part 41 and the entire region of the second extension part 42 from the -X direction and both sides of the Z direction.

The second accommodation part 64 is formed along the third extension part 43. The second accommodation part 64 covers the third extension part 43 from the -X direction and both sides of the Z direction. The insertion opening part 60 described above opens on +X direction end surfaces in the first accommodation part 63 and the second accommodation part 64 and opens on a +Y direction end surface in the second accommodation part 64. It is sufficient that at least part of inner surfaces of the first accommodation part 63 and the second accommodation part 64 are in contact with the bus bar 31.

The outer support part 62 fixes the bus bars 31 integrally in a state of being spaced from each other in the Y direction. In the present embodiment, the outer support part 62 covers the cover region 31a of each of the bus bars 31 together with the cap 61. Specifically, the outer support part 62 includes a cap cover portion 71 that covers each cap 61 and a connection portion 72 that connects the cap cover portions 71 together. That is, in the outer support part 62 of the present embodiment, the cap cover portions 71 that are adjacent to each other in the Y direction are connected together by the connection portion 72. The outer support part 62 is formed of a material that is similar to each cap 61. However, the outer support part 62 may be formed of a material that is different from the cap 61 as long as the material is an insulation material. In the present embodiment, the outer support part 62 covers only the outside of the cap 61; however, part of the outer support part 62 may enter the inside of the cap 61.

The cap cover portion 71 is formed to be larger than the cap 61. The cap cover portion 71 includes a first mold section 81 that covers the first accommodation part 63 and a second mold section (second end portion) 82 that covers the second accommodation part 64.

The first mold section 81 covers the circumference of the first accommodation part 63 in a state of closing the insertion opening part 60. In the present embodiment, a +X direction end portion in the first mold section 81 is directly in contact with the first extension part 41 of the bus bar 31. An exposure hole 84 that externally exposes the cap 61 (first accommodation part 63) is formed on a -X direction end portion of the first mold section 81.

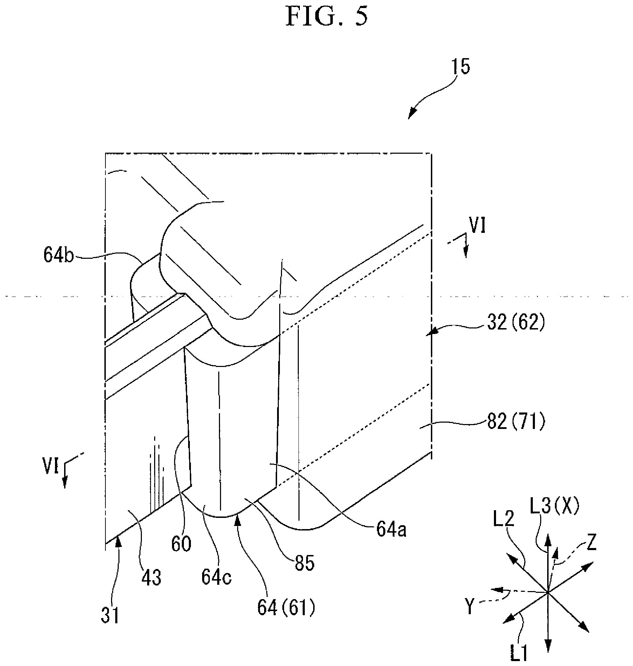

FIG. 5 is an enlarged view of a V part of FIG. 3.

As shown in FIG. 5, the second mold section 82 covers the circumference of the second accommodation part 64 in a state of closing the insertion opening part 60.

In bus bar unit 15 of the present embodiment, the third extension part 43 protrudes through the insertion opening part 60 of the cap 61 (second accommodation part 64) in the extension direction (hereinafter, simply referred to as an extension direction L1) of the third extension part 43. That is, a portion that protrudes from the cap 61 in the third extension part 43 constitutes a protrusion portion of the present embodiment.

The second accommodation part 64 includes a cap protrusion portion (first end portion) 85 that protrudes from the second mold section 82 in the extension direction L1. The cap protrusion portion 85 is externally exposed from the second mold section 82 throughout the entire circumference.

Surfaces (hereinafter, referred to as a front surface 64a and a rear surface 64b) each of which faces each of both sides of a thickness direction (hereinafter, simply referred to as a thickness direction L2) of the third extension part 43 among outer surfaces of the second accommodation part 64 are flat surfaces orthogonal to the thickness direction L2. Accordingly, the front surface 64a and the rear surface 64b of the second accommodation part 64 are flat continuous surfaces throughout a portion that protrudes from the second mold section 82 and an interface with the second mold section 82. It is sufficient that at least a portion that is positioned at the cap protrusion portion 85 of each of the front surface 64a and the rear surface 64b of the second accommodation part 64 is formed to be flat.

Among the outer surfaces of the second accommodation part 64, a corner part that is defined by the front surface 64a and a front end surface 64c (a front end surface of the cap protrusion portion 85) that is directed in the extension direction LI, and a corner part that is defined by the front end surface 64c and the rear surface 64b are formed in a curved surface.

The front end surface 64c and the front surface 64a may be orthogonal to each other. The front end surface 64c and the rear surface 64b may be orthogonal to each other. In the present embodiment, among the outer surfaces of the second accommodation part 64, both end surfaces that are directed to a width direction (hereinafter, simply referred to as a width direction L3) of the third extension part 43 are flat surfaces orthogonal to the width direction L3. The end surfaces that are directed to the width direction L3 in the second accommodation part 64 are covered by the second mold section 82 in a state where a front end part in the extension direction L1 protrudes from the second mold section 82.

As shown in FIG. 3, the second cover portion 33 covers a part from the -Z direction end portion in the fourth extension part 44 described above to a -X direction end portion in the coil connection terminal 53. Similarly to the first cover portion 32 described above, the second cover portion 33 includes a cap 90 that is attached separately to each of the bus bars 31 (fourth extension part 44) and an outer support section 91 that integrates the cap 90 and the bus bar 31.

### [Production method of bus bar unit]

Next, a production method of the above-described bus bar unit 15 is described. In the following description, a production method of the first cover portion 32 is mainly described.

As shown in FIG. 4, the cap 61 is attached to each bus bar 31. Specifically, the bus bar 31 is inserted into the cap 61 via the insertion opening part 60 from the +X direction. Thereby, the cover region 31a from the first extension part 41 to the third extension part 43 of each bus bar 31 is supported separately by the cap 61.

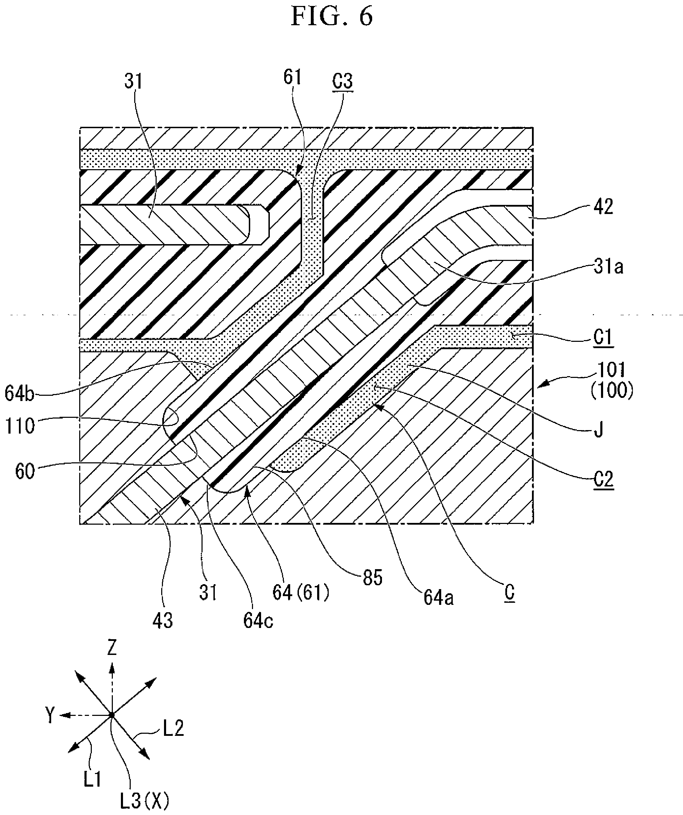

FIG. 6 is a process drawing showing a molding process of the outer support part 62 and is a cross-sectional view that corresponds to a VI-VI line of FIG. 5.

Next, as shown in FIG. 6, each bus bar 31 is set inside a shaping mold 100, and the cover region 31a of the bus bar 31 is molded integrally with the cap 61. The shaping mold 100 of the present embodiment includes a first mold (mold main body) 101 and a second mold (not shown) that is formed movably in the width direction L3 relative to the first mold 101. A space that is defined by the first mold 101 and the second mold constitutes a cavity C for molding the outer support part 62. That is, the cavity C includes a first mold part C1 for molding the first mold section 81, a second mold part C2 for molding the second mold section 82, and a third mold part C3 for molding the connection portion 72.

In the first mold 101, a support part 110 is formed at a further front end side in the extension direction L1 than the second mold part C2. The support part 110 supports the cap protrusion portion 85 at the time of molding of the outer support part 62. The support part 110 is formed along an outer surface shape of the cap protrusion portion 85. The bus bar 31 is set inside the shaping mold 100 in a state where the cap protrusion portion 85 is fitted to (lightly pressed into) the support part 110. In this case, an inner surface of the support part 110 comes into close contact with the front end surface 64c of the cap protrusion portion 85, a section to the front surface 64a from the front end surface 64c, and a section to the rear surface 64b from the front end surface 64c.

Therefore, a boundary section between the second mold part C2 and the support part 110 is set at the front surface 64a and the rear surface 64b (a second side in the extension direction L1 further than the front end surface 64c of the cap protrusion portion 85) of the cap 61.

When the outer support part 62 is molded by using the shaping mold 100 described above, first, the cover region 31a of each bus bar 31 is sandwiched in the width direction L3 by the first mold 101 and the second mold of the shaping mold 100.

Subsequently, a resin material J in a melted state is filled into the shaping mold 100. Thereby, the resin material J is filled into the cavity C inside the shaping mold 100 so as to cover the cap 61. In the present embodiment, the cap protrusion portion 85 is lightly pressed into the support part 110, and therefore, an inner surface of the support part 110 and an outer surface of the cap protrusion portion 85 are in close contact with each other. Therefore, it is prevented that the resin material J which flows inside the second mold part C2 flows into the support part 110.

After the resin material J is filled, the resin material J inside the shaping mold 100 is solidified. Then, by opening the mold, the bus bar unit 15 described above is completed.

In this way, in the present embodiment, by attaching the cap 61 to the bus bar 31, a mold portion of the outer support part 62 in the bus bar 31 is able to be reinforced by the cap 61. Thereby, at the time of molding of the outer support part 62, it is possible to prevent a position displacement and a bend of the bus bar 31 in the shaping mold 100 due to a molding pressure and the like, and it is possible to perform a positioning of the bus bar 31 in the shaping mold 100 with high accuracy. Thereby, it becomes possible to simplify the production process, and it is possible to reduce the cost and stabilize the quality.

In the present embodiment, the outer support part 62 covers the cap 61 in a state where the cap protrusion portion 85 protrudes in the extension direction L1.

According to this configuration, the boundary section between the cap 61 and the outer support part 62 is set at a more backward position than the front end surface 64c of the cap 61 in the extension direction L1. Therefore, it is possible to allow the support part 110 of the shaping mold 100 to come into contact with the front surface 64a and the rear surface 64b of the cap protrusion portion 85, and therefore, it is possible to secure a contact area between the support part 110 and the cap protrusion portion 85. Thereby, even when a plane pressure that acts between the outer surface of the cap 61 and the support part 110 is low, for example, due to a size dispersion of the cap 61 and the like, it is possible to prevent the resin material J from flowing into the support part 110 via a space between the outer surface of the cap protrusion portion 85 and the inner surface of the support part 110 at the time of molding of the outer support part 62. As a result, it is possible to prevent the resin material J from remaining as a burr on the outer surface of the cap protrusion portion 85.

Accordingly, it is possible to provide a bus bar unit 15 having an excellent quality.

In the present embodiment, the front surface 64a and the rear surface 64b of the cap protrusion portion 85 are formed in a flat surface.

According to this configuration, the cap protrusion portion 85 is easily supported at the time of molding of the outer support part 62. Therefore, it is possible to further improve the quality of the bus bar unit 15.

In the present embodiment, each of the caps 61 supports separately each of the bus bars 31, and the outer support part 62 covers collectively the caps 61.

According to this configuration, the cap 61 supports separately each of the bus bars 31, and therefore, each of the bus bars 31 is easily set at a desired position in the shaping mold 100. In this state, by integrating the bus bars 31 by the outer support part 62, it is possible to provide the bus bar unit 15 in which the relative position of the bus bars 31 is positioned with high accuracy.

In the present embodiment, the cap 61 is attached to the bus bar 31.

According to this configuration, the cap 61 that is formed separately from the bus bar 31 is attached to the bus bar 31, and therefore, it is possible to further simplify the production process. Further, it is possible to prevent a position displacement of the bus bar 31 due to an injection pressure or the like at the time of first molding (at the time of molding of the first resin part) differently from a case in which the first resin part and the second resin part are formed, for example, according to a two-color molding or the like. Thereby, it is possible to further stabilize the quality.

In the present embodiment, the metal part is the bus bar 31.

According to this configuration, it is possible to secure a rigidity, for example, compared to a case where a wire material or the like is used for the connection between the rotary electric machine 1 and the external electric source. Further, in the present embodiment, it is possible to provide the bus bar unit 15 having an excellent quality as described above, and therefore, it is possible to prevent a twist, a bend, and the like of the bus bar 31 in a state where the rotary electric machine 1 and the external electric source are connected together. Thereby, it is possible to reduce a stress that acts on the bus bar unit 15, and it is possible to improve the durability of the bus bar unit 15.

Although the preferred embodiment of the invention has been described, the invention may be carried out in other ways without departing from the scope of the appended claims.

For example, the present embodiment is described using an example in which the cap 61 is formed of an insulation material; however, the embodiment is not limited only to this configuration. The cap 61 may be formed of a material having conductivity.

The above embodiment is described using a configuration in which the cap 61 of a separate body is used as the first resin part; however, the embodiment is not limited only to this configuration. The first resin part and the second resin part may be formed according to a two-color molding.

The above embodiment is described using a configuration in which the bus bar 31 includes a plurality of extension parts 41 to 44 that extend in a different direction from one another; however, the embodiment is not limited only to this configuration. The shape of the bus bar 31 can be appropriately changed. For example, the bus bar 31 may be in a linear shape or may be bent in only two directions. Further, the angle formed by the extension parts of the bus bar 31 can also be appropriately changed.

The above embodiment is described using a configuration in which a plurality of bus bars 31 are integrated by the outer support part 62; however, the embodiment is not limited only to this configuration. The bus bars 31 may be covered one by one by the outer support part 62.

The above embodiment is described using an example in which the molded body is employed for the bus bar unit 15 used in the rotary electric machine 1; however, the embodiment is not limited only to this configuration. The molded body may be employed for a bus bar unit used for other applications (for example, an in-vehicle device such as a PCU) other than the rotary electric machine 1. Further, the molded body may be employed for a case in which a coil and an insulator are integrally formed such as a resolver or an integrally molded bobbin. Further, the molded body may be employed for a part that requires a multicolor molding from the viewpoint of a design property or the like.

## Claims

1. A bus bar unit (15), comprising:
a plurality of separate first resin parts (61);
a plurality of bus bars (31) that are configured to electrically connect an external electric source and a coil (13) of a rotary electric machine (1), that are each separately covered by the first resin parts (61) and that each have a protrusion portion which protrudes toward the coil (13) from a first end portion (85) of the first resin part (61); and
a second resin part (62) that has a second end portion (82) which is positioned on an opposite side of the protrusion portion with respect to the first end portion (85) in an extension direction of the protrusion portion and that covers all of the first resin parts (61) together in a state where the first resin parts (61) protrudes in the extension direction,
wherein
a portion of the first resin parts (61) that is positioned between the first end portion (85) and the second end portion (82) is formed in a flat surface.

2. The bus bar unit (15) according to claim 1,
wherein the first resin parts (61) are attached to the bus bars (31).

## Patentansprüche

1. Stromschieneneinheit (15), umfassend:
eine Mehrzahl von separaten ersten Kunstharzbauteilen (61);
eine Mehrzahl von Stromschienen (31), die konfiguriert sind um eine externe elektrische Energiequelle und eine Spule (13) einer rotierenden elektrischen Maschine (1) elektrisch zu verbinden, die jeweils separat von den ersten Kunstharzbauteilen (61) bedeckt werden und die jeweils einen Überstandsabschnitt aufweist, welcher in Richtung der Spule (13) von einem ersten Endabschnitt (85) des ersten Kunstharzbauteils (61) übersteht.; und
ein zweites Kunstharzbauteil (62), das einen zweiten Endabschnitt (82) aufweist, welches in Bezug auf den ersten Endabschnitt (85) in einer Erstreckungsrichtung des Überstandsabschnitts auf einer gegenüberliegenden Seite des Überstandsabschnitts positioniert ist und das alle der ersten Kunstharzbauteile (61) zusammen in einem Zustand bedeckt, in dem die ersten Kunstharzbauteile (61) in der Erstreckungsrichtung überstehen,
wobei
ein Abschnitt der ersten Kunstharzbauteile (61), der zwischen dem ersten Endabschnitt (85) und dem zweiten Endabschnitt (82) positioniert ist, in einer ebenen Fläche ausgeprägt ist.

2. Stromschieneneinheit (15) nach Anspruch 1,
wobei die ersten Kunstharzbauteile (61) an den Stromschienen (31) angebracht sind.

## Revendications

1. Unité de barres omnibus (15), comprenant :
une pluralité de premières parties de résine (61) séparées ;
une pluralité de barres omnibus (31) qui sont configurées pour relier électriquement une source électrique externe et une bobine (13) d'une machine électrique rotative (1), qui sont chacune recouvertes séparément par les premières parties de résine (61) et qui comportent chacune une portion saillante faisant saillie vers la bobine (13) depuis une première portion d'extrémité (85) de la première partie de résine (61) ; et
une deuxième partie de résine (62) qui comporte une deuxième portion d'extrémité (82) qui est positionnée sur un côté opposé de la portion saillante par rapport à la première portion d'extrémité (85) dans une direction d'extension de la portion saillante et qui recouvre toutes les premières parties de résine (61) conjointement dans un état où les premières parties de résine (61) font saillie dans la direction d'extension,
dans laquelle
une portion des premières parties de résine (61) qui est positionnée entre la première portion d'extrémité (85) et la deuxième portion d'extrémité (82) est formée dans une surface plate.

2. Unité de barres omnibus (15) selon la revendication 1,
dans laquelle les premières parties de résine (61) sont fixées aux barres omnibus (31).
